# EUROPÄISCHE PATENTSCHRIFT

(11) **EP 0 343 284 B1**
(45) Veröffentlichungstag und Bekanntmachung des Hinweises auf die Patenterteilung: **03.03.1993**
(21) Anmeldenummer: 88121450.6
(22) Anmeldetag: 22.12.1988
(51) Int. Cl.: B01D 53/04, B01D 53/22

(54) **Vorrichtung zur Gewinnung von Kohlenwasserstoffen aus hochkonzentrierten Gasströmen**
Process for obtaining hydrocarbons from high concentrated gas streams
Procédé d'obtenir d'hydrocarbures de courants de gaz d'une haute teneur

(30) Priorität: 25.03.1988 DE 3810271
(43) Veröffentlichungstag der Anmeldung: 29.11.1989
(73) Patentinhaber: OTTO OEKO-TECH GMBH & CO. KG, 50968 Köln (DE)
(72) Erfinder: Golde, Ernst, D-4150 Krefeld 1 (DE); Mathews, Waldemar, Dr., D-5010 Bergheim (DE); Schweitzer, Stephan, D-4050 Mönchengladbach (DE)
(74) Vertreter: Fitzner, Ulrich, Dr.

(56) Entgegenhaltungen:
- EP-A- 0 100 923
- US-A- 4 229 188

## Beschreibung

Die vorliegende Erfindung betrifft ein Verfahren und eine Vorrichtung zur Gewinnung von Kohlenwasserstoffen aus hochkonzentrierten Gasströmen.

Aus dem Stand der Technik sind Verfahren und Vorrichtungen zum Abscheiden von Lösemitteln aus Abluft und anderen lösemittelhaltigen Gasen bekannt. Ein solches Verfahren und eine entsprechende Anlage sind bereits in der europäischen Patentanmeldung 0215472 (=DE 3533313) vorgeschlagen worden. Die in dieser Patentanmeldung genannte Vorrichtung besteht aus zumindest einem Behälter mit wasserdampfadsorbierender Molekularsiebpackung und zumindest einem weiteren Behälter mit Lösemittel adsorbierender Molekularsiebpackung. Bei dieser Anlage wird die Abluft zunächst durch eine den Wasserdampf und anschließend durch eine ausschließlich die Lösemitteldämpfe adsorbierende Molekularsiebpackung hindurch geleitet. Die beiden Molekularsiebpackungen werden durch Erhitzen mittels Luft oder Inertgas regeneriert. Die ausschließlich wasserdampfadsorbierende Molekularsiebmischung wird zur Atmosphäre hin und die ausschließlich Lösemitteldämpfe adsorbierende Molekularsiebpackung in einem geschlossenen Kreislauf regeneriert. Innerhalb des geschlossenen Kreislaufs werden die Lösemitteldämpfe in einem Kondensationswärmeraustauscher kondensiert und aufgefangen und zur Wiederverwendung zurückgeführt.

Die Adsorption von mit organischen Stoffen beladener Abluft an Kohlefasern ist weiterhin aus wlb - Wasser, Luft und Betrieb - 5/86 S. 40-42 bekannt. Hierbei wird mit Lösemittel beladene Abluft vom Ventilator über einen Vorfilter zur Staubabscheidung gesaugt und gelangt über einen Verteilerkanal und über ein geöffnetes Ventil zu einem kohlefaserhaltigem Element. Die Abluft durchströmt das Element von außen und innen und tritt nach oben gereinigt aus. Zur gleichen Zeit wird das Nachbarelement mit Dampf im umgekehrten Sinne von innen nach außen desorbiert. Das Dampf-Lösemittel-Gemisch gelangt anschließend in einen Kondensator, wo es verflüssigt wird. Danach wird es in einen Abscheider zur Trennung des Lösemittels vom Wasser geleitet.

Ferner ist aus der EP-A-0 100 923 eine Anlage bekannt, bei der das Gasgemisch vor der Adsorption einer Diffusion an semipermeablen Membranen unterzogen wird.

Die geschilderten Verfahren nach dem Stand der Technik sind für die Gewinnung von Kohlenwasserstoffen aus hochkonzentrierten Gasströmen nicht geeignet. Entsprechende Adsorptionsanlagen würden einen großen Raum- und Zeitbedarf erfordern. Insbesondere müßte man mit möglichst großen Adsorbensvolumina arbeiten, damit das Adsorbens sich nicht zu schnell mit Kohlenwasserstoffen zusetzt und nicht zu häufig regeneriert werden muß. Bei herkömmlichen Adsorbentien sind daher die Zeitspannen für die einzelnen Chargen zu gering, um zu einem wirtschaftlichen Erfolg zu kommen. Auf der anderen Seite würde der Einsatz von mehreren mit Adsorbens gefüllten Reaktoren eine entsprechend aufwendige Meß-Steuer-Regelungstechnik erfordern. Hinzu kommt, daß der Raum- und Zeitaufwand für derartige Anlagen besonders groß ist. Auf der anderen Seite ist es nicht möglich, bei Einsatz von Membranen für die Gasseparation alle Kohlenwasserstofffraktionen aus dem konzentrierten Gasstrom zu entfernen.

Die vorliegende Erfindung hat sich nunmehr die Aufgabe gestellt, eine Vorrichtung zur Gewinnung aus Kohlenwasserstoffen aus hochkonzentrierten Gasströmen mittels Gaspermeation und Adsorption zur Verfügung stellen, bei der die genannten Nachteile nicht auftreten.

Diese Aufgabe wird dadurch gelöst, daß die Vorrichtung gekennzeichnet ist durch mindestens einen Gasseparator mit einer Zuströmleitung für das kohlenwasserstoffhaltige Gas, mit einer Abströmleitung für die nicht diffundierten Gase und mit einer Zuströmleitung zurückführenden Abströmleitung für die durch die Membran des Gasseparators diffundierten Kohlenwasserstoffe, einen in der Abströmleitung angeordneten Kühler mit nachgeschaltetem Abscheider zur Gewinnung der anfallenden flüssigen Kohlenwasserstoffe, eine zur Erzeugung des notwendigen Druckgradienten im Gasseparator vor den Kühler geschalteten Unterdruckpumpe. ggf. einen in der Zuströmleitung angeordneten Kompressor und mindestens einem regenerierbaren Adsorber der dem mindestens einen Gasseparator auf der Abströmleitung nachgeschaltet ist.

Erfindungsgemäß wird eine Anordnung bevorzugt, bei der zwei Gasseparatoren und ein Adsorber eingesetzt werden. Letzterer wird vorzugsweise im Gaskreislauf zwischen den Gasseparatoren angeordnet. Für die Gasseparatoren kommen handelsübliche Membranen in Betracht. Hierzu zählen Ethylzellulose, Silicongummi, Polyimid, Polyethylenterephtalat, Polyamid 6 und Polyvinylidenfluorid.

Die Gasseparatoren sind mit Zuleitungen für das kohlenwasserstoffhaltige Gas und mit Leitungen für das zumindest teilweise von Kohlenwasserstoffen befreite Gas versehen. Diese Leitungen dienen gleichzeitig der Verbindung zwischen Adsorber und Gasseparator.

Die Verbindungsleitung zwischen Adsorber und diesem nachgeschalteten Gasseparator ist vorzugsweise mit einem Kühler und einem Abscheider versehen. Außerdem können ein Druckventil und eine Vakuumpumpe vorhanden sein.

Für die Adsorption sind insbesondere Molekularsiebe geeignet, da sie aufgrund ihrer kristallinen Struktur mit genau definiertem Porendurchmesser die Möglichkeit bieten, spezifische Lösemittel selektiv heraus zu filtern. Für jedes Lösemittel kann ein maßgeschneiderter Molekularsiebtyp gewählt werden. Solche Molekularsiebe sind beispielsweise in Oberfläche-Surface Nr. 4, 1986, S.T.P.P. Januar/Februar Vol. 23, 1987, Seite 28-29 und der europäischen Patentanmeldung 0215472 beschrieben. Besonders bevorzugt werden Natrium-Aluminium-Silicate. Ebenso kommen als Adsorbens Aktivkohle, Aluminiumoxid und/oder Silicagel in Betracht. Ganz besonders werden erfindungsgemäß hydrophobierte Molekularsiebe bevorzugt. Die Auslegung der Adsorber erfolgt über definierte Beladeraten, abgestimmt auf die Betriebsparameter der Produktionsanlage, wie Gasmenge und Gehalt an Kohlenwasserstoffen.

Für die Regeneration ist der Adsorber mit einer Zuleitung für Regenerationsgas, einem Heizkreislauf und einem Kühlkreislauf versehen. In dem Heizkreislauf wird mittels eines Heizers durch ein Kreislaufgebläse in Umlauf gehaltenes Regenerationsgas erhitzt und zum Beheizen des Adsorbers verwendet.

Vor Beginn einer jeden Adsorptionsphase muß das Adsorbens wieder auf Betriebstemperatur abgekühlt werden. Zu diesem Zweck ist der Adsorber mit einem Kühlkreislauf ausgestattet. Erfindungsgemäß sind Kühlkreislauf und Heizkreislauf ineinander integriert, so daß durch einfaches Umschalten von Ventilen in demselben Kreislauf gekühlt oder geheizt werden kann. Daher ist nur ein Kreislaufgebläse erforderlich.

In einer erfindungsgemäß besonders bevorzugten Ausführungsform werden zwei Adsorber neben einem Gasseparator eingesetzt, welchem zwecks Erzeugung eines Überdrucks ein Kompressor vorgeschaltet ist. Während des Betriebs wird in einem Adsorber stets eine Adsorption durchgeführt, während in dem zweiten Adsorber eine Desorption stattfindet. Als Regenerationsgas wird das durch die Adsorption gewonnene von Kohlenwasserstoffen befreite Gas verwendet. Zu diesem Zweck wird stets ein Teilstrom des aus dem auf Adsorption geschalteten Adsorbers austretenden Gases abgezweigt und in den auf Desorption geschalteten Adsorber eingespeist. Das infolge der Desorption mit Kohlenwasserstoffen aus dem desorbierten Adsorber beladene Gas wird über einen Kühler und Abscheider wieder in den Gaspermeationskreislauf eingeschleust. Hierbei kann die erfindungsgemäße Vorrichtung überraschend einfach in der Weise ausgestaltet sein, daß für Gaspermeation und Adsorption nur ein gemeinsamer Kühler und ein gemeinsamer Tropfenabscheider angeordnet ist.

Gegenstand der vorliegenden Erfindung ist weiterhin ein Verfahren zur Gewinnung von Kohlenwasserstoffen aus hochkonzentrierten Gasen in einem mehrstufigen Prozeß. Dieses Verfahren ist dadurch gekennzeichnet, daß das kohlenwasserstoffhaltige Gas nach Erzeugung des notwendigen Druckgradienten mittels der Unterdruckpumpe über die Zuströmleitung dem Gasseparator zugeleitet wird, die nicht diffundierten Gase über die Abströmleitung abgeführt werden, die durch die Membran des Gasseparators diffundierten Kohlenwasserstoffe über die weitere Abströmleitung dem Kühler und dem nachgeschalteten Abscheider zur Gewinnung der anfallenden flüssigen Kohlenwasserstoffe zugeleitet werden, das von den flüssigen Kohlenwasserstoffen abgetrennte Gas zur Zuströmleitung über die Abströmleitung zurückgeführt wird und das nicht durch die Membran des Gasseparators diffundierte Gas über die Abströmleitung dem Adsorber zugeführt wird. In einer Variante des Verfahrens wird das zu behandelnde Gas über einen ersten Gasseparator, über einen Adsorber und über einen zweiten Gasseparator geleitet.

Die Separation der Gase erfolgt durch Membranen. Hierbei wirkt ein unter Druck stehendes Gasgemisch auf eine Membran ein und wird infolge unterschiedlicher Löslichkeit der Komponenten in der Membran getrennt.
Die Diffusion durch die Membran folgt dem Druckgrandienten. Erfindungsgemäß wird der Druckgradient mit Hilfe einer Unterdruckpumpe erzeugt. Nach anschließendem Abkühlen kann die betreffende Kohlenwasserstofffraktion in flüssiger Form durch einen Abscheider gewonnen werden.

In bestimmten Zeitabständen muß das Adsorptionsbett regeneriert werden. Auch diese Regeneration kann in demselben System erfolgen. Hierfür wird erfindungsgemäß ein Regenerationsgas über eine Leitung dem Adsorber zugeführt. Als Regenerationsgas werden vorzugsweise Luft oder Inertgase eingesetzt. Üblicherweise wird Stickstoff verwendet. Das Regenerationsgas wird mittels eines Kreislaufgebläses über eine Heizer geleitet und dort erhitzt. Das erhitzte Regenerationsgas wird in den Adsorber zurückgeführt Mit zunehmender Erwärmung desorbiert das Adsorbens. Die Kohlenwasserstoffe werden mit dem Regenerationsgasstrom aus dem Adsorber abgeführt. Nach Abschluß der Desorption wird der Heizkreislauf auf Kühlen umgeschaltet, bis der Adsorber wieder Betriebstemperatur erlangt hat und die Adsorptionsphase wieder gestartet werden kann.

Das mit Kohlenwasserstoffen angereicherte Regenerationsgas wird über einen Kühler und einen Abscheider in der Regel drucklos der zweiten Gaspermeation zugeleitet. Besonders gut wird der Wirkungsgrad des erfindungsgemäßen Verfahrens durch Einsatz einer Vakuumpumpe, mit deren Hilfe in der Verbindungsleitung zwischen Adsorber und Gasseparator ein Unterdruck erzeugt werden kann.

Schließlich wird das Restkohlenwasserstoffe enthaltende Regenerationsgas einer zweiten Gasseparation unterworfen. Danach enthält das Gas nur noch Spuren von Kohlenwasserstoffen. Dieses gereinigte Gas kann sodann wieder in den Produktionskreislauf eingespeist werden.

Die Abtrennung der einzelnen Fraktionen kann erfindungsgemäß auch mittels eines Gasseparators und zweier diesem nachgeordneten Adsorber erfolgen, nachdem in einem dem Gasseparator vorgeschalteten Kompressor zunächst ein Überdruck erzeugt worden ist (bis zu 50 bar). Hierbei strömt das vom Gasseparator kommende Gas nur einen der beiden Adsorber an. Das diesen nach erfolgter Adsorption verlassende gereinigte Gas wird teilweise abgezweigt und im Gegenstrom durch den zweiten Adsorber geschickt, so daß das von Kohlenwasserstoffen befreite Gas als Desorptionsmittel wirkt. Das mit Kohlenwasserstoffen aus dem Adsorber beladene Gas wird sodann dem Gaspermeationskreislauf wieder zugeführt. Sobald die Desorption abgeschlossen ist, kann auf Adsorption wieder umgeschaltet werden, wobei zugleich der andere Adsorber auf Desorption eingestellt wird. Aufgrund dieser erfindungsgemäßen Anordnung ist es nicht mehr notwendig für die Desorption den Reinigungsprozeß zu unterbrechen. Vielmehr kann im kontinuierlichen Betrieb die Entfernung der Kohlenwasserstoffe aus den Gasströmen erreicht werden. Ebensowenig ist ein Erhitzen und Abkühlen des Adsorptionsbettes erforderlich, da das System allein mit Druckwechsel arbeitet. Die Drücke liegen zwischen 1 und 50 bar.

Das erfindungsgemäße Verfahren und die erfindungsgemäße Vorrichtung können insbesondere zur Rückgewinnung von organischen Lösemitteln, chlorierten und nicht-chlorierten Kohlenwasserstoffen und Aromaten eingesetzt werden. Ein besonders wichtiges Einsatzgebiet ist die Rückgewinnung von Benzin.

Im folgenden wird die erfindungsgemäße Anlage unter Bezugnahme auf die Zeichnungen näher erläutert:
- In Figur 1: ist eine erfindungsgemäße Anlage mit zwei Gasseparatoren und einem Adsorber dargestellt.
- In Figur 2: ist eine erfindungsgemäße Anlage mit einem Gasseparator und zwei Adsorbern dargestellt.
- In Figur 3: sind die in Figur 2 dargestellten Adsorber gesondert dargestellt.

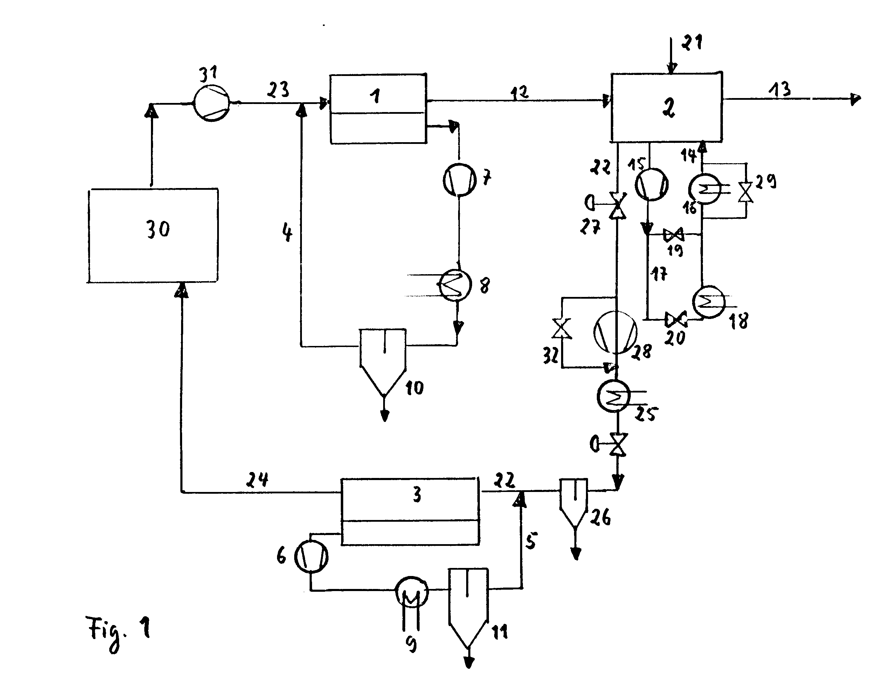

In der Anlage gemäß Figur 1 wird hochkonzentriertes kohlenwasserstoffhaltiges Gas dem Tank 30 entnommen und über ein Kreislaufgebläse 31 durch die Leitung 23 dem Gasseparator 1 zugeführt. Die Unterdruckpumpe 7 des Gasseparators bewirkt die Einstellung eines Druckgradienten. Vorzugsweise kann ein Druck von 0,1 bar eingestellt werden. Infolge des Druckgradienten diffundiert Gas durch die Membran des Gasseparators. In dem Kühler 8 werden die gasförmigen Komponenten abgekühlt und im Abscheider 10 in flüssiger Form gewonnen. Erfindungsgemäß wird bis zu 1°C abgekühlt.

Über die Leitung 12 werden die Kohlenwasserstoffbestandteile dem Adsorber zugeführt, die nicht durch die Membran des Gasseparators diffundiert sind und nicht im Abscheider 10 abgeschieden worden sind. In dem Adsorber werden die restlichen Kohlenwasserstoffbestandteile adsorbiert. Über die Leitung 13 verläßt schließlich gereinigtes Gas den Adsorber.

Über die Leitung 21 wird dem Adsorber Regenerationsgas zugeführt. Dieses wird in dem Heizkreislauf 14 auf bis zu 200°C erhitzt und so lange durch das Adsorberbett geleitet, bis dieses durchwärmt ist. Durch das Kreislaufgebläse 15 wird das Gas ständig im Kreislauf gehalten. Das durch den Adsorber strömende erhitzte Regenerationsgas treibt die an dem Adsorbens anhaftenden Kohlenwasserstoffbestandteile aus. Die Wirkung beruht darauf, daß mit steigender Temperatur sich die Bindekräfte der Kohlenwasserstoffe an das Adsorptionsmittel lösen und auf diese Weise das Regenerationsgas mit Kohlenwasserstoffen sich anreichert. Die Temperaturen liegen erfindungsgemäß zwischen 70 und 200°C. Ein bevorzugter Temperaturbereich ist 80 bis 140°C.

Der erfindungsgemäße Adsorber ist vorzugsweise als druckfestes Gefäß ausgestaltet, da das Verfahren vorzugsweise unter Druck arbeitet. Hierbei treten Drücke zwischen 2 und 10 bar auf. Der übliche Arbeitsbereich des erfindungsgemäßen Verfahrens liegt bei 3 bis 4 bar.

Nach Abschluß der Desorption wird das Adsorptionsbett wieder abgekühlt. Während der Kühlphase ist das Ventil 19 geschlossen, während die Ventile 20 und 29 geöffnet werden. Nach Abschluß der Kühlphase kann wieder mit der Adsorption begonnen werden. Insgesamt werden für die Regeneration des Adsorptionsbettes ungefähr 4 Stunden, vorzugsweise 1 bis 2 Stunden benötigt. Üblicherweise wird 1,5 Stunden regeneriert.

Während der Heizphase wird fortwährend mit Kohlenwasserstoffen beladenes Regenerationsgas über die Leitung 22 aus dem Adsorber 2 abgeführt. In dem Kühler 25 wird das erhitzte Gas abgekühlt, so daß im Abscheider 26 die anfallenden flüssigen Kohlenwasserstoffe gewonnen werden können. Über die Vakuumpumpe 28 kann zusätzlich ein Unterdruck erzeugt werden. Dieser liegt zwischen 0,1 und 0,8 bar. Überlicherweise arbeitet das erfindungsgemäße Verfahren bei 0,5 bar.

In einer besonders bevorzugten Ausführungsform der Erfindung befindet sich in der Zuleitung 22 eine Umgehungsleitung 32 für die Vakuumpumpe 28. Bei dieser Anordnung wird während des Heizens der mit Kohlenwasserstoffen beladene Regenerationsgasstrom ausschließlich über die Leitung 32 geleitet. In diesem Zustand wird demzufolge der Kohlenwasserstoff drucklos abgezogen. Wenn der größte Teil der Kohlenwasserstoffe desorbiert ist, wird ein Vakuum über die Vakuumpumpe 28 gezogen und einige Zeit zur Restdesorption aufrechterhalten. Bei den eingestellten Drücken von 0,1 bis 0,8 bar wird erfindungsgemäß eine vollständige Restdesorption erreicht. Besonders gut sind die Ergebnisse bei 0,5 bar.

Nach der Kondensation mittels Kühlers 25 und Abscheiders 26 wird das Reste von Kohlenwasserstoffe enthaltende Regenerationsgas einer zweiten Gaspermeation im Gasseparator 3 unterworfen. Durch die Pumpe 6 wird hier der notwendige Druckgradient erzeugt. Im Kühler 9 wird bis zu 1°C abgekühlt und mittels Tropfenabscheiders 11 der flüssige Restkohlenwasserstoff gewonnen. Über die Leitung 24 wird das von Kohlenwasserstoffen nahezu befreite Regenerationsgas dem Tank 30 wieder zugeführt. In der Regel sind nach der zweiten Gaspermeation mit Ausnahme des Propans alle Kohlenwasserstoffe aus dem Regenerationsgas entfernt.

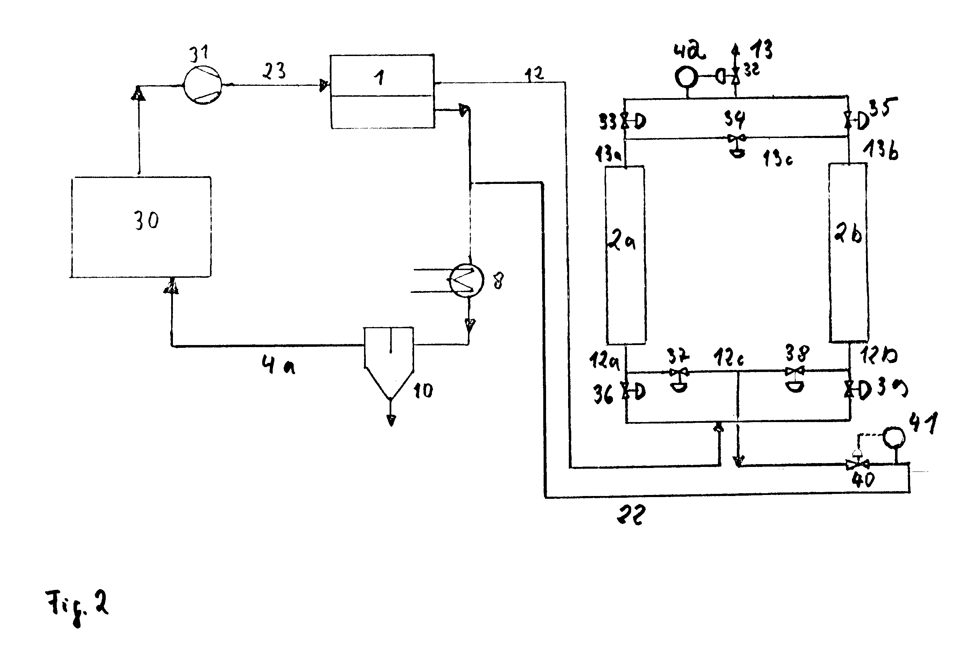

In der Anlage gemäß Figur 2 wird - wie in der Anlage gemäß Figur 1 - hochkonzentriertes kohlenwasserstoffhaltiges Gas dem Tank 30 entnommen, durch Kompressor 31 auf einen Druck von 2 - 50 bar gebracht und durch die Leitung 23 dem Gasseparator 1 zugeführt. Durch den Druckgradienten diffundiert das Gas durch die Membran des Gasseparators. In dem Kühler 8 werden die gasförmigen Komponenten abgekühlt und im Abscheider 10 in flüssiger Form gewonnen. Das Gas wird sodann vom Abscheider 10 über die Leitung 4a wieder dem Tank 30 zugeführt.

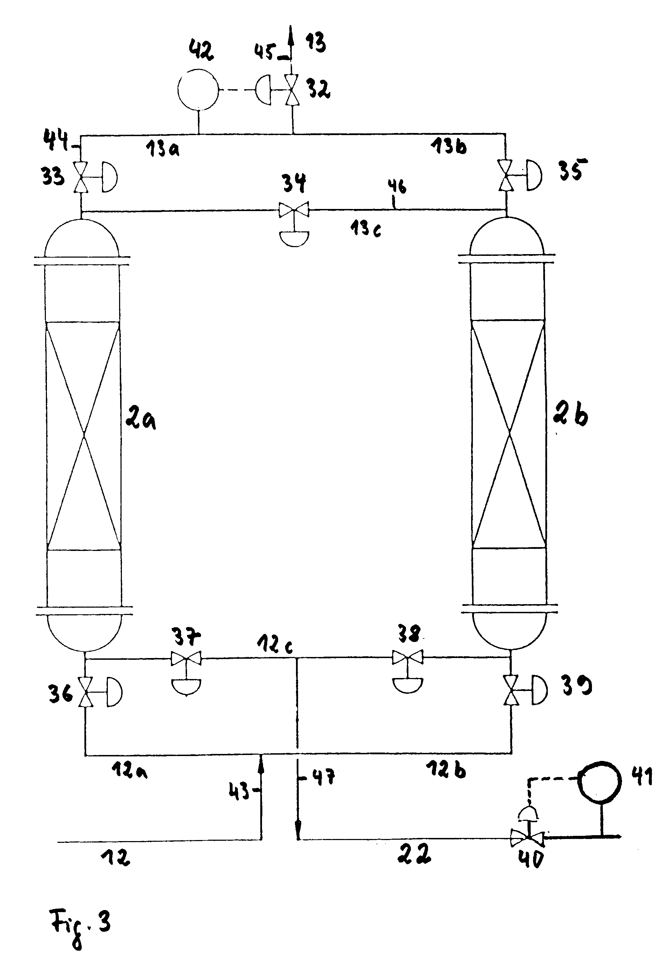

Über die Leitung 12 werden die Kohlenwasserstoffbestandteile (vgl. a. Figur 3), die nicht durch die Membran des Gasseparators diffundiert sind und nicht im Abscheider 10 abgeschieden worden sind, den Adsorbern zugeführt. Durch Öffnen des Ventils 36 und gleichzeitiges Schließen der Ventile 39 und 37 wird erreicht, daß das zu reinigende Gas über die Zuleitung 12a in den Adsorber 2a gelangt. Hier werden die restlichen Kohlenwasserstoffbestandteile adsorbiert. Über die Leitung 13a, die geöffneten Ventile 32 und 33 und die Ableitung 13 verläßt schließlich gereinigtes Gas den Adsorber 2a.

Über die Leitung 13 c und das Ventil 34 kann ein Teilstrom des in dem Adsorber 2a gewonnenen gereinigten Gases abgezweigt werden und dem Adsorber 2b zugeleitet werden. Hier wirkt es als Regenerationsgas, indem es im Gegenstrom zur Adsorptionsströmungsrichtung durch den Adsorber geleitet wird. In der Regel werden etwa 10 % des gewonnenen Reingases abgezweigt. Je nach Bedarf lassen sich jedoch andere Werte einstellen. Ebenso kann auch eine Regelung mittels des Reglers 42 in Abhängigkeit von den jeweiligen Betriebsbedingungen erfolgen.

Während der Desorption des Adsorbers 2b sind die Ventile 35, 37 und 39 geschlossen. Das Ventil 38 ist geöffnet, so daß mit Kohlenwasserstoffen beladenes Gas über die Ableitung 12b und über das mittels des Reglers 41 einstellbare Ventil 40 in die Leitung 22 gelangen kann.

Nach Abschluß der Desorption werden die
Ventile 35, 37 und 39 geöffnet, während die Ventile 33, 36 und 38 geschlossen werden. Hierdurch wird erreicht, daß der aus der Leitung 12 kommende Gasstrom nicht mehr den Adsorber 2a, sondern den Adsorber 2b anströmt. Über die Leitung 13c wird nunmehr ein Teil des gewonnenen Reingases dem Adsorber 2a zugeleitet, so daß dieser regeneriert wird.

Über die Leitung 12a gelangt das mit Kohlenwasserstoffen beladene Gas aus dem Adsorber 2a in die Leitung 22. Über diese Leitung wird das Gas in den Gaspermeationskreislauf eingespeist, wo es über den Kühler 8 und den Tropfenabscheider 10 geführt wird. Von dem Tropfenabscheider 10 aus gelangt das Gas schließlich über Leitung 4a in den Tank 30.

Im Gegensatz zu der Ausführungsform gemäß Figur 1 ist es bei der Ausführungsform gemäß Figur 2 und 3 nicht notwendig, erhitztes Regenerationsgas für die Desorption zu verwenden, da die Desorption mit Hilfe von Druckwechsel in den Adsorbern erreicht wird. Der Heizkreislauf 14 und Vakuumpumpe 28 können daher entfallen. Da somit keine Heizenergie erforderlich ist, arbeitet das Verfahren besonders kostengünstig. Der Wirkungsgrad nimmt mit sinkender Temperatur sogar zu. Erfindungsgemäß liegen die Temperaturen zwischen -20 und +55°C. Bevorzugt wird der Temperaturbereich +10 bis +20°C. Die Drücke liegen im Bereich von 1 bis 50 bar. Die Konzentrationen in der Zuleitung 12a zum Adsorber betragen 1 bis 50 g Kohlenwasserstoffe pro m³, vorzugsweise 10 bis 20 g Kohlenwasserstoffe pro m³.

Mit der Vorrichtung gemäß Figur 2 und 3 lassen sich die Adsorptionsbetten innerhalb von 10 Minuten regenerieren. Der Wirkungsgrad der Vorrichtung ist auch deshalb besonders groß, weil der Reinigungsprozeß nicht für die Regeneration des Adsorbers unterbrochen werden muß und infolgedessen das Verfahren kontinuierlich betrieben werden kann. Kostengünstig wirkt sich schließlich aus, daß die Kühler 25, 9 sowie die Tropfenabscheider 26 und 11 nicht mehr von Nöten sind, da Kühler 8 und Tropfenabscheider 10 gleichermaßen der Gaspermeation und der Adsorption nachgeschaltet sind.

Im folgenden wird das erfindungsgemäße Verfahren anhand der folgenden Beispiele näher erläutert:

### Beispiel 1

Aus dem Tank 30 strömt ein Volumenstrom von 1000 m³/h. Die Konzentration an Kohlenwasserstoffen beträgt 1000 g/m³. Nach der ersten Permeation betrug die Konzentration nur noch 10 g/m³. Aus dem Abscheider 10 konnten 990 kg Kohlenwasserstoffe pro Stunde in flüssiger Form gewonnen werden. Das den Adsorber 2 über die Leitung 13 verlassende Gas hatte nur noch eine Konzentration von 150 mg Kohlenwasserstoffen pro m³. Für die Regeneration des Adsorbers wurde Stickstoff mit einer Geschwindigkeit von 10m³/h eingespült. Der in der Leitung 22 eingestellte Druck betrug 0,5 bar. Das mit den Restkohlenwasserstoffen beladene Stickstoffgas wurde auf 1°C abgekühlt, so daß im Tropfenabscheider 26 4 kg Kohlenwasserstoffe pro Stunde erhalten wurden. Bei der zweiten Gaspermeation wurde im Kühler 9 ebenfalls auf 1°C abgekühlt. Hierbei fielen wiederum 4 kg Kohlenwasserstoffe pro Stunde an. Das über die Leitung 24 dem Tank 30 wieder zugeführte Regenerationsgas enthielt fast ausschließlich Propan in einer Konzentration von 200 g/m³.

Die Regeneration des Adsorptionsbettes erfolgte bei einer Temperatur von ungefähr 120°C. Nach Abschluß der Desorption wurde das Regenerationgsgas mittels des Kühlers 18 auf +1°C abgekühlt.

### Beispiel 2

Das aus dem Gasseparator kommende Gas gemäß Beispiel 1 wird einer Adsorptionsanlage gemäß Figur 3 zugeführt. Die genauen Daten des Prozesses können der folgende Tabelle entnommen werden, wobei die Werte jeweils an den Messpunkten 43, 44, 45, 46 und 47 gemäß Figur 3 ermittelt wurden:

| Bilanz | | 43 | 44 | 45 | 46 | 47 |
|---|---|---|---|---|---|---|
| Volumenstrom | Nm³/h | 220 | 200 | 200 | 20 | 20 |
| Druck | bar | 10 | 10 | 1 | 10 | 1 |
| Temp. | °C | 35 | 53 | 51 | 53 | 51 |
| Konz. an KW | g/m³ | 20 | 0,1 | 0,1 | 0,1 | 220 |
| Massenstrom KW | kg/h | 4 | 0,02 | 0,02 | 0,002 | 3,98 |
| Massenstrom H₂O | kg/h | 1,4 | 0,001 | 0,001 | 0,0001 | 1,399 |

Aus der Tabelle ist ersichtlich, daß der Volumenstrom in der Adsorptionsphase um etwa den Faktor 10 höher ist als in der Desorptionsphase. Adsorption und Desorption werden unter Druck ausgeführt, während nach Abschluß der Desorption in Leitung 22 das Gas wieder auf Normaldruck entspannt wird. Der Druck in der Zuleitung betrug 10 bar und die Temperatur 35°C. Die Konzentration an Kohlenwasserstoffen betrug 20 g/m³. Im Verlaufe des Adsorptionsprozesses stieg die Temperatur auf 53°C. Durch die Adsorption konnte die Konzentration an Kohlenwasserstoffen auf 0,1 g/m³ gesenkt werden. Das aus der Desorption kommende Gas hatte einen Gehalt von 220 g/m³ an Kohlenwasserstoffen. Die Temperatur in der Desorptionsphase betrug 51°C.

Im Ergebnis wurde mit dieser Anlage ein reineres Gas als im Beispiel 1 erreicht, obwohl die Eingangskonzentration an Kohlenwasserstoffen doppelt so hoch ist. Die Regenerationswerte sind mit denen gemäß Beispiel 1 trotz der erheblich niedrigeren Temperatur vergleichbar.

## Patentansprüche

1. Vorrichtung zum Gewinnen von Kohlenwasserstoffen aus hochkonzentrierten Gasströmen mittels Gaspermeation und Adsorption,
**gekennzeichnet durch**
a) mindestens einen Gasseparator (1,3) mit einer Zuströmleitung (23,22) für das kohlenwasserstoffhaltige Gas aus einem Tank (30), mit einer Abströmleitung (12,24) für die nicht diffundierten Gase und mit einer zur Zuströmleitung (23,22) zurückführenden Abströmleitung (4,5) für die durch die Membran des Gasseparators diffundierten Kohlenwasserstoffe,
b) einen in der Abströmleitung (4,5) angeordneten Kühler (8,9) mit nachgeschaltetem Abscheider (10,11) zur Gewinnung der anfallenden flüssigen Kohlenwasserstoffe,
c) eine zur Erzeugung des notwendigen Druckgradienten im Gasseparator (1,3) vor den Kühler (8,9) geschalteten Unterdruckpumpe (7,6) und/oder einen in der Zuströmleitung (23) angeordneten Kompressor (31), wobei die zurückführende Abströmleitung (4,5), der Kühler (8,9), der Abscheider (10,11) und die Unterdruckpumpe (7,6) bzw. der Kompressor (31) sich in einem Kühlkreislauf befinden und
d) mindestens einen regenerierbaren Adsorber (2,2a,2b), der dem mindestens einen Gasseparator (1) auf der Abströmleitung (12) nachgeschaltet ist.

2. Vorrichtung gemäß Anspruch 1,
**dadurch gekennzeichnet,** daß sie aus zwei in Reihe geschalteten Gasseparatoren (1,3) besteht, zwischen denen der Adsorber (2) angeordnet ist.

3. Vorrichtung gemäß Ansprüche 2,
**dadurch gekennzeichnet,** daß der Adsorber (2)
a) mit einer Zuleitung (12) für das vom Gasseparator (1) zuströmende vorgereinigte Gas und einer Ableitung (13) für gereinigtes Gas,
b) einem Heizkreislauf (14) mit Kreislaufgebläse (15) und Heizer (16),
c) einem Kühlkreislauf (17) mit Kühler (18).
d) einer Zuleitung (21) für Regenerationsgas und
e) einer Verbindungsleitung (22) für die Ableitung des kohlenwasserstoffhaltigen Regenerationsgases versehen ist.

4. Vorrichtung gemäß Anspruch 3,
**dadurch gekennzeichnet,** daß der Heizkreislauf (14) in den Kühlkreislauf (17) derart integriert ist, daß beide Kreisläufe durch ein einziges Kreislaufgebläse (15) betrieben werden können und durch Umschalten von Ventilen (19,20) jeweils gekühlt oder geheizt werden kann.

5. Vorrichtung gemäß einem der Ansprüche 3 bis 5,
**dadurch gekennzeichnet,** daß die Verbindungsleitung (22) zwischen Adsorber (2) und Gasseparator (3) mit einem Kühler (25) und einem Abscheider (26) versehen ist.

6. Vorrichtung gemäß einem der Ansprüche 3 bis 6,
**dadurch gekennzeichnet,** daß die Verbindungsleitung (22) zwischen Adsorber (2) und Gasseparator (3) mit einem Druckventil (27) und einer Vakuumpumpe (28) versehen ist.

7. Vorrichtung zum Gewinnen von Kohlenwasserstoffen aus hochkonzentrierten Gasströmen gemäß Anspruch 1,
**dadurch gekennzeichnet,** daß sie aus einem Gasseparator (1) und zwei diesem nachgeordneten, parallel geschalteten Adsorbern (2a,2b) besteht, wobei dem Gasseparator ein Kompressor (31) vorgeschaltet ist.

8. Vorrichtung gemäß Anspruch 7,
**dadurch gekennzeichnet,** daß in ihr für Gasseparator (1) und Adsorber (2a,2b) ein gemeinsamer Kühlerkreislauf (4a) bestehend aus Kühler (8) und Abscheider (10) angeordnet ist.

9. Vorrichtung gemäß Anspruch 8
**dadurch gekennzeichnet,** daß die Zu(12a,12b) und Ableitungen (13a,13b) der Adsorber (2a,2b) untereinander über Verbindungsleitungen (12c,13c) verbunden sind, in denen Ventile (32-40) und Regeleinrichtungen (41,42) zwecks Schaltung der Adsorber (2a,2b) auf Desorptions- bzw. Adsorptionsbetrieb sind.

10. Vorrichtung gemäß einem der Ansprüche 1 bis 9,
**dadurch gekennzeichnet,** daß das Adsorbens eine übliche Molekularsiebpackung ist.

11. Vorrichtung gemäß Anspruch 10,
**dadurch gekennzeichnet,** daß die Molekularsiebpackung aus Natriumaluminiumsilicat besteht.

12. Vorrichtung gemäß Anspruch 11,
**dadurch gekennzeichnet,** daß das Adsorbens aus hydrophobierten Molekularsieben besteht.

13. Vorrichtung gemäß Anspruch 10,
**dadurch gekennzeichnet,** daß das Adsorbens aus Aktivkohle, Aluminiumoxid und/oder Silicagel besteht.

14. Verfahren zur Gewinnung von Kohlenwasserstoffen aus hochkonzentrierten Gasströmen in mehreren Stufen in einer Vorrichtung gemäß einem der Ansprüche 1 bis 13,
**dadurch gekennzeichnet,** daß
a) das kohlenwasserstoffhaltige Gas nach Erzeugung des notwendigen Druckgradienten mittels der Unterdruckpumpe (7) über die Zuströmleitung (23) dem Gasseparator (1) zugeleitet wird,
b) die nicht diffundierten Gase über die Abströmleitung (12) abgeführt werden.
c) die durch die Membran des Gasseparators diffundierten Kohlenwasserstoffe über die weitere Abströmleitung (4) dem Kühler (8) und dem nachgeschalteten Abscheider (10) zur Gewinnung der anfallenden flüssigen Kohlenwasserstoffe zugeleitet werden,
d) das von den flüssigen Kohlenwasserstoffen abgetrennte Gas zur Zuströmleitung (23) über die Abströmleitung (4) zurückgeführt wird und
e) das nicht durch die Membran des Gasseparators (1) diffundierte Gas über die Abströmleitung (12) dem Adsorber (2,2a,2b) zugeführt wird.

15. Verfahren gemäß Anspruch 14,
**dadurch gekennzeichnet,** daß das zu behandelnde Gas nacheinander
a) über einen ersten Gasseparator (1),
b) über einen Adsorber (2) und
c) über einen zweiten Gasseparator (3) geleitet wird.

16. Verfahren gemäß Anspruch 15 in einer Vorrichtung gemäß Anspruch 4
**dadurch gekennzeichnet,** daß zur Regeneration des Adsorbens
a) ein Regenerationsgas über eine Leitung (21) dem Adsorber zuströmt,
b) durch ein Kreislaufgebläse (15) einem Heizer (16) zugeleitet und dort erhitzt wird,
c) über eine Leitung (14) das erhitzte Gas in den Adsorber gelangt und das Adsorbens desorbiert wird,
d) lösemittelhaltiges Regenerationsgas über eine Leitung (22) abfließt und
e) nach Abschluß der Desorption durch Umschalten der Ventile (19,20,29) das umlaufende Regenerationsgas über einen Kühler (18) und durch den Adsorber im Kreislauf geführt wird, bis dieser auf Betriebstemperatur abgekühlt ist.

17. Verfahren gemäß Anspruch 15 in einer Vorrichtung gemäß Anspruch 5
**dadurch gekennzeichnet,** daß das mit Kohlenwasserstoff angereicherte Regenerationsgas über einen Kühler (25) und einen Abscheider (26) drucklos abgeleitet wird.

18. Verfahren gemäß Anspruch 15 in einer Vorrichtung gemäß Anspruch 6
**dadurch gekennzeichnet,** daß durch eine Vakuumpumpe (28) ein Unterdruck in der Verbindungsleitung (22) zwischen Adsorber (2) und Gasseparator (3) erzeugt wird.

19. Verfahren gemäß Anspruch 18,
**dadurch gekennzeichnet,** daß ein Unterdruck von 0,1 bis 0,8 bar eingestellt wird.

20. Verfahren gemäß Anspruch 19,
**dadurch gekennzeichnet,** daß ein Unterdruck von 0,5 bar eingestellt wird.

21. Verfahren gemäß Anspruch 14 in einer Vorrichtung gemäß Anspruch 7
**dadurch gekennzeichnet,** daß in dem Kompressor (31) ein Druck zwischen 2 bis 50 bar erzeugt wird und anschließend die Abtrennung der einzelnen Fraktionen mittels eines Gasseparators (1) und zweier diesem nachgeordneten, parallel geschalteten Adsorber (2a,2b) erfolgt, wobei stets einer der Adsorber (2a,2b) auf Adsorption und einer auf Desorption geschaltet ist.

22. Verfahren nach Anspruch 21,
**dadurch gekennzeichnet,** daß
a) ein Teil des aus einem auf Adsorption geschalteten Adsorbers (2a,2b) strömenden gereinigten Gases als Regenerationsgas in den zweiten auf Desorption geschalteten Adsorber (2a,2b) ohne Temperaturerhöhung und unter Druckwechsel geleitet wird,
b) das mit Kohlenwasserstoffen beladene Gas über Leitung (22), Kühler (8) und Abscheider (10) geführt wird und
c) von Kohlenwasserstoffen befreites Regenerationsgas dem Tank (30) wieder zugeleitet wird.

23. Verfahren gemäß einem der Ansprüche 16 bis 20,
**dadurch gekennzeichnet,** daß während der Regeneration auf 70 bis 200 °C erhitzt wird.

24. Verfahren gemäß Anspruch 23,
**dadurch gekennzeichnet,** daß auf 80 bis 140 ° C erhitzt wird.

25. Verfahren gemäß einem der Ansprüche 23 oder 24,
**dadurch gekennzeichnet,** daß während des Heizens über ein in die Verbindungsleitung (22) angeordnetes Druckregelventil (27) ein Druck von 2 bis 10 bar eingestellt wird.

26. Verfahren gemäß Anspruch 25,
**dadurch gekennzeichnet,** daß ein Druck von 3 bis 4 bar eingestellt wird.

27. Verwendung der Vorrichtung gemäß Anspruch 1 bis 13 zur Rückgewinnung von organischen Lösemitteln, chlorierten und nicht-chlorierten Kohlenwasserstoffen und Aromaten, insbesondere Benzin aus hochkonzentrierten Gasströmen.

## Claims

1. A device for obtaining hydrocarbons from high-concentration gas flows by means of gas permeation and adsorption,
**characterized by**
a) at least one gas separator (1,3) with an inlet pipe (23,22) for the gas containing hydrocarbons from a tank (30), with an offtake pipe (12,24) for the non-diffused gases and with an offtake pipe (4,5) leading back to the inlet pipe (23,22) for the hydrocarbons diffused through the membrane of the gas separator,
b) a condenser (8,9) arranged in the offtake pipe (4,5) with a downstream separator (10,11) for obtaining the resulting liquid hydrocarbons,
c) a reduced pressure pump (7,6) arranged upstream of the condenser (8,9) in order to generate the necessary pressure gradient in the gas separator (1,3), and/or a compressor (31) arranged in the inlet pipe (23), the offtake pipe (4,5) leading back thereto, the condenser (8,9), the separator (10,11) and the reduced pressure pump (7,6) and the compressor (31) respectively being in a cooling cycle, and
d) at least one regenerable adsorber (2,2a,2b) which is arranged downstream of at least the one gas separator (1) on the offtake pipe (12).

2. The device according to claim 1,
**characterized in that** it is composed of two gas separators (1,3) connected in series between which the adsorber (2) is arranged.

3. The device according to claim 2,
**characterized in that** the adsorber (2) is provided with
a) an inlet (12) for the precleaned gas coming in from the gas separator (1) and an outlet (13) for the cleaned gas,
b) a heating cycle (14) having a cycling fan (15) and a heater (16),
c) a cooling cycle (17) including a condenser (18),
d) an inlet (21) for the regeneration gas, and
e) a connecting pipe (22) for the outlet of the regeneration gas containg hydrocarbons.

4. The device according to claim 3,
**characterized in that** the heating cycle (14) is integrated in the cooling cycle (17) such that both cycles can be operated by one single cycling fan (15) and can be cooled or heated through reversing valves (19,20) each.

5. The device according to any of claims 3 to 5,
**characterized in that** the connecting pipe (22) between adsorber (2) and gas separator (3) is provided with a condenser (25) and a separator (26).

6. The device according to any of claims 3 to 6,
**characterized in that** the connecting pipe (22) between adsorber (2) and gas separator (3) is provided with a pressure valve (27) and a vaccuum pump (28).

7. The device for obtaining hydrocarbons from high-concentration gas flows according to claim 1,
**characterized in that** it is composed of a gas separator (1) and two adsorbers (2a,2b) arranged downstream of the latter and connected in parallel, a compressor (31) being arranged upstream of the gas separator.

8. The device according to claim 7,
**characterized in that** a common cooling cycle (4a) is arranged here consisting of condenser (8) and separator (10) for gas separator (1) and adsorbers (2a,2b).

9. The device according to claim 8,
**characterized in that** the inlets (12a,12b) and outlets (13a,13b) of the adsorbers (2a,2b) are connected among each other via connecting pipes (12c,13c) in which there are valves (32-40) and control means (41,42) for the purpose of turning the adsorbers (2a,2b) to desorption and adsorption operation respectively.

10. The device according to any of claims 1 to 9,
**characterized in that** the adsorbent material is a common molecular sieve packing.

11. The device according to claim 10,
**characterized in that** the molecular sieve packing is composed of sodium aluminium silicate.

12. The device according to claim 11,
**characterized in that** the adsorbent material is composed of hydrophobed molecular sieves.

13. The device according to claim 10,
**characterized in that** the adsorbent material is composed of activated carbon, aluminium oxide and/or silica gel.

14. Process for obtaining hydrocarbons from high-concentration gas flows in a plurality of steps in a device according to any of claims 1 to 13,
**characterized in that**
a) after generating the necessary pressure gradient by means of the reduced pressure pump (7), the gas containing hydrocarbons is supplied to the gas separator (1) via the inlet pipe (23),
b) the non-diffused gases are withdrawn via the offtake pipe (12),
c) the hydrocarbons diffused through the membrane of the gas separator are supplied to the condenser (8) and the downstream separator (10) via the further offtake pipe (4) so as to obtain the resulting liquid hydrocarbons,
d) the gas separated from the liquid hydrocarbons is returned to the inlet pipe (23) via the offtake pipe (4), and
e) the gas not diffused through the membrane of the gas separator (1) is supplied to the adsorber (2,2a,2b) via the offtake pipe (12).

15. The process according to claim 14,
**characterized in that** the gas to be treated is successively led
a) via a first gas separator (1),
b) via an adsorber (2), and
c) via a second gas separator (3).

16. The process according to claim 15 in a device according to claim 4,
**characterized in that** in order to regenerate the adsorbent material
a) a regeneration gas is supplied to the adsorber via a pipe (21),
b) through a cycling fan (15) it is led to a heater (16) and is heated there,
c) via a pipe (14) the heated gas reaches the adsorber and the adsorbent material is desorbed,
d) regeneration gas containing solvents is withdrawn via a pipe (22), and
e) after completing the desorption by reversing the valves (19,20,29), the circulating regeneration gas is recycled via a condenser (18) and through the adsorber until the latter has cooled down to operating temperature.

17. The process according to claim 15 in a device according to claim 5,
**characterized in that** the regeneration gas enriched with hydrocarbon is withdrawn without the use of pressure via a condenser (25) and a separator (26).

18. The process according to claim 15 in a device according to claim 6,
**characterized in that** a reduced pressure is generated in the connecting pipe (22) between adsorber (2) and gas separator (3) by means of a vaccuum pump (28).

19. The process according to claim 18,
**characterized in that** a reduced pressure of 0,1 to 0,8 bar is set.

20. The process according to claim 19,
**characterized in that** a reduced pressure of 0,5 bar is set.

21. The process according to claim 14 in a device according to claim 7,
**characterized in that** a pressure between 2 and 50 bar is generated in the compressor (31) and subsequently the separation of the individual fractions takes place by means of a gas separator (1) and two adsorbers (2a,2b) arranged downstream of the latter and connected in parallel, one of the adsorbers (2a,2b) being always turned to adsorption and one being always turned to desorption.

22. The process according to claim 21,
**characterized in that**
a) a part of the cleaned gas flowing out of the one adsorber (2a,2b) turned to adsorption is led into the second adsorber (2a,2b) turned to desorption as a regeneration gas without an increase in temperature and with a change of pressure,
b) the gas charged with hydrocarbons is led via pipe (22), condenser (8) and separator (10), and
c) regeneration gas liberated from hydrocarbons is again supplied to the tank (30).

23. The process according to any of claims 16 to 20,
**characterized in that** it is heated to 70 - 200°C during regeneration.

24. The process according to claim 23,
**characterized in that** it is heated to 80 - 140°C.

25. The process according to any of claims 23 or 24,
**characterized in that** a pressure of 2 to 10 bar is set via a pressure control valve (27) arranged in the connecting pipe (22) during heating.

26. The process according to claim 25,
**characterized in that** a pressure of 3 to 4 bar is set.

27. The use of the device according to claims 1 to 13 for recovering organic solvents, chlorinated and non-chlorinated hydrocarbons and aromatics, particularly naphta from highly-concentrated gas flows.

## Revendications

1. Dispositif pour la récupération d'hydrocarbures dans des flux gazeux très concentrés, au moyen de la perméation gazeuse et de l'absorption, caractérisé par :
a) au moins un séparateur de gaz (1, 3) avec une conduite d'amenée (23, 22) pour le gaz contenant des hydrocarbures et venant d'une cuve (30), avec une conduite d'évacuation (12, 24) pour les gaz non diffusés et avec une conduite d'évacuation (4, 5) ramenant à la conduite d'amenée (23, 22) pour les hydrocarbures diffusés à travers la membrane du séparateur de gaz,
b) un refroidisseur (8, 9) disposé dans la conduite d'évacuation (4, 5), avec un séparateur (10, 11) monté à la suite pour la récupération des hydrocarbures liquides produits,
c) une pompe à vide (7, 6) montée avant le refroidisseur (8, 9), pour la production du gradient de pression nécessaire dans le séparateur de gaz (1, 3), et/ou un compresseur (31) placé dans la conduite d'amenée (23), de sorte que la conduite d'évacuation de retour (4, 5), le refroidisseur (8, 9), le séparateur (10, 11) et la pompe à vide (7, 6) ou le compresseur (31) se trouvent dans un circuit de refroidissement, et
d) au moins un absorbeur (2, 2a, 2b) à régénération, qui est placé à la suite dudit au moins un séparateur de gaz (1) sur la conduite d'évacuation (12).

2. Dispositif selon la revendication 1, caractérisé en ce qu'il consiste en deux séparateurs de gaz (1, 3) montés en série et entre lesquels est placé l'absorbeur (2).

3. Dispositif selon la revendication 2, caractérisé en ce que l'absorbeur (2) est muni :
a) d'une conduite d'amenée (12) pour le gaz préépuré qui s'écoule depuis le séparateur de gaz (1) et d'une conduite d'évacuation (13) pour le gaz épuré,
b) d'un circuit de chauffage (14) avec soufflante (15) et dispositif de chauffage (16),
c) d'un circuit de refroidissement (17) avec refroidisseur (18),
d) d'une conduite d'amenée (21) pour le gaz de régénération et
e) d'une conduite de connexion (22) pour l'évacuation du gaz de régénération contenant des hydrocarbures.

4. Dispositif selon la revendication 3, caractérisé en ce que le circuit de chauffage (14) est intégré de telle manière dans le circuit de refroidissement (17) que les deux circuits peuvent être commandés par une seule soufflante (15) et chaque fois refroidis ou chauffés par la commutation de soupapes (19, 20).

5. Dispositif selon l'une quelconque des revendications 3 et 4, caractérisé en ce que la conduite de connexion (22) entre absorbeur (2) et séparateur de gaz (3) est munie d'un refroidisseur (25) et d'un séparateur (26).

6. Dispositif selon l'une quelconque des revendications 3 à 5, caractérisé en ce que la conduite de connexion (22) entre l'absorbeur (2) et le séparateur de gaz (3) est munie d'une soupape de pression (27) et d'une pompe à vide (28).

7. Dispositif pour la récupération d'hydrocarbures dans des flux gazeux très concentrés selon la revendication 1, caractérisé en ce qu'il se compose d'un séparateur de gaz (1) et de deux absorbeurs (2a, 2b) montés en parallèle placés à la suite de celui-ci, un compresseur (31) étant monté avant le séparateur de gaz.

8. Dispositif selon la revendication 7, caractérisé en ce qu'un circuit de refroidissement (4a) commun, consistant en un refroidisseur (8) et en un séparateur (10) est monté dans le dispositif pour la séparation de gaz (1) et l'absorbeur (2a, 2b).

9. Dispositif selon la revendication 8, caractérisé en ce que les conduites d'amenée (12a, 12b) et d'évacuation (13a, 13b) des absorbeurs (2a, 2b) sont en relation réciproque par l'intermédiaire de conduites de connexion (12c, 13c), dans lesquelles des soupapes (32 à 40) et des dispositifs régulateurs (41, 42) sont placés pour effectuer la commutation des absorbeurs (2a, 2b) en fonctionnement de désorption ou d'absorption.

10. Dispositif selon l'une quelconque des revendications 1 à 9, caractérisé en ce que l'absorbant est un paquet de tamis moléculaires courant.

11. Dispositif selon la revendication 10, caractérisé en ce que le paquet de tamis moléculaires consiste en un silicate d'aluminium et de sodium.

12. Dispositif selon la revendication 11, caractérisé en ce que l'absorbant consiste en des tamis moléculaires imperméabilisés.

13. Dispositif selon la revendication 10, caractérisé en ce que l'absorbant consiste en du charbon actif, de l'oxyde d'aluminium et/ou du gel de silice.

14. Procédé pour la récupération d'hydrocarbures dans des flux gazeux très concentrés en plusieurs étapes dans un dispositif selon l'une quelconque des revendications 1 à 13, caractérisé en ce que :
a) le gaz contenant des hydrocarbures est amené, après l'obtention du gradient de pression nécessaire au moyen de la pompe à vide (7), par l'intermédiaire de la conduite d'amenée (23), au séparateur de gaz (1),
b) les gaz non diffusés sont évacués par l'intermédiaire de la conduite d'évacuation (12),
c) les hydrocarbures diffusés à travers la membrane du séparateur de gaz sont amenés par l'intermédiaire de l'autre conduite d'évacuation (4) au refroidisseur (8) et au séparateur (10) monté à la suite pour la récupération des hydrocarbures liquides produits,
d) le gaz séparé des hydrocarbures liquides est ramené à la conduite d'amenée (23) par l'intermédiaire de la conduite d'évacuation (4) et
e) le gaz non diffusé à travers la membrane du séparateur de gaz (1) est amené à l'absorbeur (2, 2a, 2b) par l'intermédiaire de la conduite d'évacuation (12).

15. Procédé selon la revendication 14, caractérisé en ce que le gaz à traiter est acheminé successivement
a) par un premier séparateur de gaz (1),
b) par un absorbeur (2) et
c) par un second séparateur de gaz (3).

16. Procédé selon la revendication 15 dans un dispositif selon la revendication 4, caractérisé en ce que pour la régénération de l'absorbant
a) un gaz de régénération s'écoule dans l'absorbeur par l'intermédiaire d'une conduite (21),
b) qu'il est amené par une soufflante (15) à un dispositif de chauffage (16) et qu'il y est chauffé,
c) le gaz chauffé arrive par l'intermédiaire d'une conduite (14) dans l'absorbeur et l'absorbant est désorbé,
d) le gaz de régénération contenant des solvants s'écoule par l'intermédiaire d'une conduite (22) et
e) une fois la désorption terminée, par une commutation des soupapes (19, 20, 29), le gaz de régénération circulant est conduit par l'intermédiaire d'un refroidisseur (18) et par l'absorbeur dans le circuit jusqu'à ce que celui-ci soit refroidi jusqu'à la température de service.

17. Procédé selon la revendication 15 dans un dispositif selon la revendication 5, caractérisé en ce que le gaz de régénération enrichi par les hydrocarbures est évacué par l'intermédiaire d'un refroidisseur (25) et d'un séparateur (26) sans pression.

18. Procédé selon la revendication 15 dans un dispositif selon la revendication 6, caractérisé en ce qu'une dépression est produite par une pompe à vide (28) dans la conduite de connexion (22) entre l'absorbeur (2) et le séparateur de gaz (3).

19. Procédé selon la revendication 18, caractérisé en ce qu'une dépression est réglée entre 10⁴ et 8.10⁴ Pa.

20. Procédé selon la revendication 19, caractérisé en ce que la dépression est réglée à 5.10⁴ Pa.

21. Procédé selon la revendication 14 dans un dispositif selon la revendication 7, caractérisé en ce qu'une pression comprise entre 2.10⁵ et 5.10⁶ Pa est produite dans le compresseur (31) et qu'ensuite la séparation des fractions individuelles est effectuée au moyen d'un séparateur de gaz (1) et des deux absorbeurs (2a, 2b) montés en parallèle placés après celui-ci, l'un des absorbeurs (2a, 2b) étant toujours en fonctionnement d'absorption et l'autre en fonctionnement de désorption.

22. Procédé selon la revendication 21, caractérisé en ce que
a) une partie du gaz épuré s'écoulant d'un absorbeur (2a, 2b) en fonctionnement d'absorption, est acheminée en tant que gaz de régénération dans le deuxième absorbeur (2a, 2b) en fonctionnement de désorption, sans augmentation de température et avec un changement de pression,
b) le gaz chargé d'hydrocarbures est acheminé par l'intermédiaire de la conduite (22), du refroidisseur (8) et du séparateur (10) et
c) le gaz de régénération libéré des hydrocarbures est de nouveau ramené dans la cuve (30).

23. Procédé selon l'une quelconque des revendications 16 à 20, caractérisé en ce que, pendant la régénération, on chauffe de 30 jusqu'à 200° C.

24. Procédé selon la revendication 23, caractérisé en ce que l'on chauffe de 80 jusqu'à 140°C.

25. Procédé selon l'une quelconque des revendications 23 ou 24, caractérisé en ce que pendant le chauffage, une pression de 2.10⁵ à 10⁶ Pa est réglée par l'intermédiaire d'une soupape régulatrice de pression (27) placée dans la conduite de connexion (22).

26. Procédé selon la revendication 25, caractérisé en ce qu'une pression de 3.10⁵ à 4.10⁵ Pa est réglée.

27. Utilisation du dispositif selon l'une quelconque des revendications 1 à 13 pour la récupération de solvants organiques, d'hydrocarbures chlorés et non chlorés et d'aromatiques, en particulier le benzène à partir de flux gazeux très concentrés.
